(19) Europäisches Patentamt
European Patent Office
Office européen des brevets

(11) **EP 3 698 103 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(21) Anmeldenummer: **19710289.0**

(22) Anmeldetag: **20.02.2019**

(51) Int Cl.:
*G01D 3/08* *(2006.01)*       *G01P 21/02* *(2006.01)*
*G01D 3/036* *(2006.01)*      *G06F 17/18* *(2006.01)*
*B61L 25/02* *(2006.01)*       *B60T 8/172* *(2006.01)*
*B60T 8/88* *(2006.01)*        *G01D 18/00* *(2006.01)*

(86) Internationale Anmeldenummer:
**PCT/EP2019/054219**

(87) Internationale Veröffentlichungsnummer:
**WO 2019/166300 (06.09.2019 Gazette 2019/36)**

(54) **ABSCHÄTZEN DER MESSGENAUIGKEIT UNTERSCHIEDLICHER SENSOREN FÜR DIESELBE MESSGRÖSSE**

ESTIMATING THE MEASUREMENT ACCURACY OF DIFFERENT SENSORS FOR THE SAME MEASURAND

ESTIMATION DE LA PRÉCISION DE MESURE DE DIFFÉRENTS CAPTEURS POUR LA MÊME GRANDEUR DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2018 DE 102018202976**

(43) Veröffentlichungstag der Anmeldung:
**26.08.2020 Patentblatt 2020/35**

(73) Patentinhaber: **Siemens Mobility GmbH**
**81739 München (DE)**

(72) Erfinder:
• **NOURANI-VATANI, Navid**
**12489 Berlin (DE)**
• **PALMER, Andrew**
**4004 Spring Hill (AU)**

(56) Entgegenhaltungen:
DE-A1-102013 210 361     US-A1- 2010 312 461
US-A1- 2013 132 784

• **ANDREW W PALMER ET AL: "Robust Odometry using Sensor Consensus Analysis", ARXIV.ORG, CORNELL UNIVERSITY LIBRARY, 201 OLIN LIBRARY CORNELL UNIVERSITY ITHACA, NY 14853, 6. März 2018 (2018-03-06), XP080858302,**
• **MORALES Y ET AL: "Vehicle localization in outdoor woodland environments with sensor fault detection", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW; PASADENA, CA, USA, MAY 19-23, 2008, IEEE, PISCATAWAY, NJ, USA, 19. Mai 2008 (2008-05-19), Seiten 449-454, XP031340192, ISBN: 978-1-4244-1646-2**

**Beschreibung**

Die Erfindung betrifft ein Verfahren zum Abschätzen der Messgenauigkeit unterschiedlicher Sensoren für dieselbe Messgröße. Zudem betrifft die Erfindung ein Messverfahren zum Ermitteln eines Messwertes einer Messgröße auf Basis von Messwerten von einer Mehrzahl von unterschiedlichen Sensoren. Überdies betrifft die Erfindung eine Abschätzeinrichtung. Ferner betrifft die Erfindung eine Messeinrichtung. Weiterhin betrifft die Erfindung ein Schienenfahrzeug.

Um ein Schienenfahrzeug sicher betreiben zu können, werden zuverlässige Informationen bezüglich der Position und der Geschwindigkeit des Fahrzeugs benötigt. Messungen zur Ermittlung von Geschwindigkeiten von Fahrzeugen werden zum Beispiel mit Hilfe von Drehzahlmessern, Doppler-Radargeräten und GPS-Sensoren, vorgenommen. Werden unterschiedliche Arten von Messgeräten miteinander kombiniert, so können die einzelnen Messwerte der unterschiedlichen Messgeräte je nach Genauigkeit unterschiedlich gewichtet kombiniert werden, um in unterschiedlichen Situationen immer eine optimale Messgenauigkeit zu erhalten. Allerdings muss dafür die situationsabhängige Messgenauigkeit der einzelnen Messgeräte bekannt sein. Messfehler durch Drehzahlmesser können durch Schlupf bei Beschleunigungs- und Bremsmanövern auftreten. Auch Doppler-Radargeräte können ungenaue Messwerte liefern, wenn Tunnel oder andere geschlossene Strukturen durchfahren werden. Dabei entstehen Geschwindigkeits-Offsetwerte. Satellitennavigationssysteme können aufgrund einer Abschattung der Satelliten oder einer ungünstigen Positionierung der Satelliten ebenfalls ungenau sein.

Grobe Abweichungen, sogenannte Ausreißer, d.h. stark abweichende Werte aufgrund von Rauscheffekten oder plötzlich auftretende Fehler, die zu scharfen Änderungen der Messwerte führen, können mit Hilfe der Berechnung des Mahalanobis-Abstands als Metrik ermittelt werden. Solche Fehlmessungen können dann verworfen werden. Allerdings gibt es Situationen, in denen Messwerte nur langsam divergieren, wie zum Beispiel bei Schlupf. In einem solchen Fall kann es passieren, dass gerade die Messergebnisse, die nicht durch das Schlupfverhalten beeinträchtigt sind, als fehlerhaft verworfen werden und die fehlerhaften Messungen beibehalten werden.

Beschleunigungsvorgänge können durch inertiale Messeinheiten detektiert werden und mit Abweichungen durch Schlupf in Verbindung gebracht werden. Allerdings können durch solche Messeinheiten keine konstanten Geschwindigkeitsabweichungen, wie sie bei Radarmessungen auftreten, detektiert werden. Um trotzdem Geschwindigkeitsmessungen durchführen zu können, müssen oft große Fehlertoleranzen angenommen werden, die auch dann gelten, wenn die Sensorik gerade sehr zuverlässige Messwerte erzeugt. Auf diese Weise kommt es bei Fahrzeugen zu deutlich erhöhten Angaben der Geschwindigkeit. Bei Zügen führt dies häufig zu verspätetem Eintreffen an Zielbahnhöfen.

US-A-2010/312461 schlägt vor, zu einer besseren Bestimmung einer aktuellen Position die Messwerte mehrerer Sensoren miteinander zu verknüpfen, wobei auch ein z-Test Anwendung findet, um fehlerhafte Messwerte erkennen und ausschließen zu können.

DE-A-10 2013 210361 und US-A-2013/132784 betreffen die Ermittlung von Messwerten aus mehreren Sensoren, insbesondere unter Berücksichtigung der Zuverlässigkeit und Varianz der einzelnen Messwerte.

Es besteht also die Aufgabe, ein Verfahren und eine Einrichtung zu entwickeln, um kombinierte Messungen einer Messgröße, beispielsweise der Geschwindigkeit eines Zuges, mit unterschiedlichen Sensoren, präziser zu gestalten.

Diese Aufgabe wird durch ein Verfahren zum Abschätzen der Messgenauigkeit unterschiedlicher Sensoren für dieselbe Messgröße gemäß Patentanspruch 1, ein Messverfahren gemäß Patentanspruch 6, eine Abschätzeinrichtung gemäß Patentanspruch 8, eine Messeinrichtung gemäß Patentanspruch 9 und ein Schienenfahrzeug gemäß Patentanspruch 10 gelöst.

Bei dem erfindungsgemäßen Verfahren zum Abschätzen der Messgenauigkeit unterschiedlicher Sensoren für dieselbe Messgröße werden Messwerte $m_i$ derselben Messgröße, welche durch unterschiedliche Sensoren erfasst wurden, empfangen. Ein Messwert $m_i$ soll in diesem Zusammenhang nicht nur den im engeren Sinn als Messwert verstandenen Mittelwert $\mu_i$ einer zugeordneten statistischen Normalverteilung $n_i$, sondern auch die statistische Normalverteilung $n_i$ sowie eine der statistischen Normalverteilung $n_i$ zugeordnete Standardabweichung $\sigma_i$ umfassen. Als Basis der erfassten Messwerte $m_i$ der unterschiedlichen Sensoren sowie der erwähnten statistischen Normalverteilung $n_i$ der Messwerte $m_i$ wird eine Konsens-Matrix CM durch Anwenden eines z-Tests mit einem vorbestimmten Signifikanzwert p ermittelt. Als Konsens soll in diesem Zusammenhang eine statistische Übereinstimmung verstanden werden, die einen vorbestimmten Signifikanzwert p erreicht oder überschreitet. Der Konsens wird mit Hilfe des genannten z-Tests ermittelt. Als z-Test soll in diesem Zusammenhang ein Gauß-Test verstanden werden. Bei dem z-Test wird ein z-Wert $z_{test}$ mit einem Referenzwert $z_{des}$ verglichen.

Der Referenzwert $z_{des}$ ergibt sich aus der Formel:

$$z_{des} = invnorm\left(\frac{p}{2}\right) \quad . \tag{1}$$

Der Referenzwert $z_{des}$ kann als eine Art Testschwellenwert angesehen werden, der für ein positives Ergebnis des z-Tests erreicht werden muss. Als inverse Norm 'invnorm" ist hier die Umkehrfunktion der kumulativen Verteilungsfunktion einer Normalverteilung $n_i$ gemeint.

Der eigentliche Testwert $z_{test}$ ergibt sich zu:

$$z_{test} = \frac{-|\mu_i - \mu_j|}{\sqrt{\sigma_i^2 + \sigma_j^2}} \quad . \tag{2}$$

Dabei sind $\mu_i$, $\mu_j$ die im engeren Sinn als Messwerte zu verstehenden Mittelwerte der Messungen zweier unterschiedlicher Sensoren und $\sigma_i$, $\sigma_j$ die jeweiligen Standardabweichungen der den jeweiligen Messungen $m_i$, $m_j$ zugeordneten Normalverteilungen $n_i$, $n_j$. Wird ein positives Ergebnis eines z-Tests zwischen zwei Messwerten $\mu_i$, $\mu_j$ erreicht, so erfolgt ein Eintrag in der Konsens-Matrix mit einem Wert '1". Ergibt ein z-Test ein negatives Ergebnis, so erhält die entsprechende Matrix-Komponente $CM_{ij}$ der Konsens-Matrix CM den Wert "0". Insgesamt sind also jedem Messwert $m_i$ für i = 1 ...n, n Einträge in der Konsens-Matrix CM zugeordnet.

Dann erfolgt ein Reskalieren der statistischen Normalverteilungen $n_i$ derjenigen Messwerte $m_i$, welche den geringsten Konsens, d.h. die meisten Eintragungen in der Konsens-Matrix CM mit dem Wert 0 aufweisen, mit dem kleinsten Skalierungswert, mit dem mindestens einer dieser Messwerte $m_i$ einen erhöhten Konsens aufweist. Mit einer Skalierung bzw. Reskalierung der Normalverteilungen $n_i$ ist gemeint, dass die Breite der Normalverteilungen erhöht wird, d.h., die Varianz $\sigma_i^2$ bzw. die Standardabweichung $\sigma_i$ wird erhöht.

Die Standardabweichung $\sigma_i$ einer Verteilungskurve $n_i$ einer Messung $m_i$ eines Sensors kann zum Beispiel anhand der Spezifikation eines Sensors bekannt sein. Der Messwert bzw. Mittelwert $\mu_i$ der Verteilung $n_i$ ergibt sich aus der jeweiligen Messung des betreffenden Sensors. Manchmal übermitteln Sensoren mit ihrer Messung auch eine geschätzte Unsicherheit einer Messung. Beispielsweise kann bei einem Satellitennavigationssystem die Genauigkeit auf Basis der Zahl und der Position der aktuell sichtbaren Satelliten ermittelt und dem Benutzer angegeben werden.

Die beiden letzten Schritte werden wiederholt, bis ein gewünschtes Konsens-Niveau erreicht ist. Bevorzugt wird als gewünschtes Konsens-Niveau ein maximaler Konsens angestrebt. D.h., alle Messungen $m_i$ erfüllen mit allen Messungen $m_j$ die Konsensbedingung $z_{test} >= z_{des}$.

Vorteilhaft wird bei dem erfindungsgemäßen Verfahren der z-Test als eine Art Stop-Bedingung genutzt. Auf diese Weise können sowohl Ausreißer als auch unsichere Daten von mehreren Sensoren herausgefiltert werden, wobei die Unsicherheit der Daten entsprechend erhöht wird. Dadurch wird erreicht, dass das Ergebnis einer Fusion von unsicheren Sensorwerten eine bessere Zuverlässigkeit aufweist und eine zu hoch eingeschätzte Zuverlässigkeit der Messwerte $m_i$ bei den genannten Anomalien vermieden wird, aber trotzdem bei normalen Bedingungen eine hohe Zuverlässigkeit der Messwerte $m_i$ beibehalten wird.

Bei dem erfindungsgemäßen Messverfahren zum Ermitteln eines kombinierten Messwertes m einer Messgröße auf Basis von Messwerten $m_i$ von einer Mehrzahl von unterschiedlichen Sensoren werden Messwerte $m_i$ derselben Messgröße durch unterschiedliche Sensoren sensoriell erfasst. Weiterhin wird das erfindungsgemäße Verfahren zum Abschätzen der Messgenauigkeit unterschiedlicher Sensoren für dieselbe Messgröße auf die erfassten Messwerte $m_i$ angewendet. Schließlich wird ein kombinierter Messwert m der Messgröße durch gewichtetes Kombinieren der erfassten Messwerte $m_i$ ermittelt, wobei die Gewichtung in Abhängigkeit von der den jeweiligen Messwerten $m_i$ zugeordneten Normalverteilungen $n_i$ erfolgt.

Aufgrund der durch das erfindungsgemäße Verfahren zum Abschätzen der Messgenauigkeit unterschiedlicher Sensoren für dieselbe Messgröße präziser eingeschätzten Zuverlässigkeit der Messwerte $m_i$ der unterschiedlichen Sensoren kann auch die Fusion der Messwerte mit erhöhter Zuverlässigkeit erfolgen, wobei zuverlässigere Einzelwerte stärker gewichtet werden als unzuverlässigere Messwerte.

Die erfindungsgemäße Abschätzeinrichtung weist eine Schnittstelle zum Empfangen einer Mehrzahl von Messwerten $m_i$ derselben Messgröße, welche von unterschiedlichen Sensoreinheiten erfasst wurden, auf. Teil der erfindungsgemäßen Abschätzeinrichtung ist auch eine Konsens-Ermittlungseinheit zum Ermitteln einer Konsens-Matrix CM durch Anwenden eines z-Tests mit einem vorbestimmten Signifikanzwert p auf Basis der erfassten Messwerte $m_i$ sowie einer angenommenen statistischen Normalverteilung der Messwerte und zum Prüfen, ob ein gewünschtes Konsens-Niveau erreicht ist. Die erfindungsgemäße Abschätzeinrichtung umfasst auch eine Skalenwertermittlungseinheit zum Ermitteln von Skalierungswerten der statistischen Normalverteilungen $n_i$ der Messwerte $m_i$, welche den geringsten Konsens aufweisen, mit denen die Messwerte $m_i$ jeweils einen erhöhten Konsens aufweisen. Weiterhin ist Teil der Abschätzeinrichtung auch eine Reskalierungseinheit zum Reskalieren der statistischen Normalverteilungen $n_i$ der Messwerte $m_i$, welche den geringsten Konsens aufweisen, mit dem kleinsten ermittelten Skalierungswert, mit dem mindestens einer dieser Messwerte $m_i$ einen erhöhten Konsens aufweist. Die erfindungsgemäße Abschätzeinrichtung teilt die Vorteile des erfindungsgemäßen Verfahrens zum Abschätzen der Messgenauigkeit unterschiedlicher Sensoren für dieselbe Messgröße.

Die erfindungsgemäße Messeinrichtung weist eine Mehrzahl von Sensoreinheiten unterschiedlicher Art zum sensoriellen Erfassen von Messwerten $m_i$ derselben Messgröße auf. Außerdem umfasst die erfindungsgemäße Messeinrichtung eine erfindungsgemäße Abschätzeinrichtung zum Ermitteln von Normalverteilungen $n_i$ für die erfassten Messwerte $m_i$ entsprechend einem vorbestimmten Konsens-Niveau. Überdies ist Teil der erfindungsgemäßen Messeinrichtung eine Fusionseinheit zum Ermitteln eines gemeinsamen bzw. kombinierten Messwertes m der Messgröße durch gewichtetes Kombinieren der erfassten Messwerte, wobei die Gewichtung in Abhängigkeit von den den jeweiligen Messwerten $m_i$ zugeordneten Normalverteilungen $n_i$ erfolgt. Die erfindungsgemäße Messeinrichtung teilt die Vorteile des erfindungsgemäßen Messverfahrens.

Das erfindungsgemäße Schienenfahrzeug weist die erfindungsgemäße Abschätzeinrichtung auf. Das erfindungsgemäße Schienenfahrzeug teilt die Vorteile der erfindungsgemäßen Abschätzeinrichtung.

Teile der erfindungsgemäßen Abschätzeinrichtung können zum überwiegenden Teil in Form von Softwarekomponenten ausgebildet sein. Dies betrifft insbesondere Teile der Konsens-Ermittlungseinheit, der Skalenwertermittlungseinheit und der Reskalierungseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine zumindest teilweise softwaremäßige Realisierung hat den Vorteil, dass auch schon bisher in einem Messgerät bzw. einer Messeinrichtung genutzte Rechnersysteme auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um alle Schritte des erfindungsgemäßen Verfahrens zum Abschätzen der Messgenauigkeit unterschiedlicher Sensoren für dieselbe Messgröße auszuführen, wenn das Computerprogramm in einem Rechnersystem des Messgeräts bzw. der Messeinrichtung ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem das genannte Computerprogrammprodukt gespeichert ist.

Die Rechnereinheit des genutzten Rechnersystems kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer bevorzugten Ausgestaltung des erfindungsgemäßen Verfahrens zum Abschätzen der Messgenauigkeit unterschiedlicher Sensoren für dieselbe Messgröße werden eine Mehrzahl von Kandidatenskalenwerten sc, mit denen jeweils ein Messwert $m_i$ einen erhöhten Konsens aufweist, berechnet. Von diesen Kandidatenskalenwerten wird dann der kleineste Skalierungswert $sc_{min}$ für die Reskalierung ausgewählt wird. Vorteilhaft wird eine kleinschrittige Skalierung erreicht, wobei einzelne Messwerte $m_i$ bzw. deren Normalverteilungen $n_i$ immer nur so weit skaliert werden wie nötig. Auf diese Weise wird eine maximale Genauigkeit bzw. eine minimale Messtoleranz erreicht.

In einer Ausgestaltung des erfindungsgemäßen Verfahrens zum Abschätzen der Messgenauigkeit unterschiedlicher Sensoren für dieselbe Messgröße werden die Kandidatenskalierungswerte sc für den Fall, dass die für die Berechnung der Kandidatenskalierungswerte verwendeten Vergleichswerte $m_j$ nicht zu den Messwerten $m_i$ gehören, die den niedrigsten Konsens aufweisen, nach folgender Formel berechnet:

$$sc = \sqrt{\frac{\left(\frac{\mu_i - \mu_j}{z_{des}}\right)^2 - \sigma_j^2}{\sigma_i^2}}. \qquad (3)$$

Dabei stellt $\mu_i$ die zu prüfenden Mittelwerte der Messwerte $m_i$, $\mu_j$ die Mittelwerte von Vergleichswerten $m_j$, welche ebenfalls aus den Messwerten entnommen wurden, $z_{des}$ den gewünschten z-Wert, $\sigma_i$ die Standardabweichung der Verteilung des zu prüfenden Messwerts $m_i$ und $\sigma_j$ die Standardabweichung der Verteilung des Vergleichswerts $m_j$ dar.

In einer Ausgestaltung des erfindungsgemäßen Verfahrens zum Abschätzen der Messgenauigkeit unterschiedlicher Sensoren für dieselbe Messgröße werden die Kandidatenskalierungswerte sc für den Fall, dass die Vergleichswerte $m_j$ ebenfalls zu den Messwerten gehören, die den niedrigsten Konsens aufweisen, nach folgender Formel berechnet:

$$sc = \sqrt{\frac{\left(\frac{\mu_i - \mu_j}{z_{des}}\right)^2}{\sigma_i^2 + \sigma_j^2}} \quad . \qquad (4)$$

In der Formel (4) kann der Skalierungswert kleiner ausfallen als bei der Formel (3), da hier beide Vergleichswerte bzw. deren Normalverteilungen $n_i$, $n_j$ skaliert werden.

Die Erfindung wird im Folgenden unter Hinweis auf die beigefügten Figuren anhand von Ausführungsbeispielen noch einmal näher erläutert. Es zeigen:

FIG 1      ein Flussdiagramm, welches ein Verfahren zum Abschätzen der Messgenauigkeit unterschiedlicher Sensoren für dieselbe Messgröße gemäß einem Ausführungsbeispiel der Erfindung veranschaulicht,

FIG 2      ein Flussdiagramm, welches ein Messverfahren zum Ermitteln eines Messwertes m einer Messgröße auf Basis von Messwerten $m_i$, ..., $m_n$ von einer Mehrzahl von unterschiedlichen Sensoren gemäß einem Ausführungsbeispiel der Erfindung veranschaulicht,

FIG 3      eine schematische Darstellung einer Abschätzeinrichtung gemäß einem Ausführungsbeispiel der Erfindung,

FIG 4      eine schematische Darstellung einer Messeinrichtung gemäß einem Ausführungsbeispiel der Erfindung,

FIG 5      ein Schaubild, welches Normalverteilungen von Messwerten zeigt, die von unterschiedlichen Sensoren erfasst wurden,

FIG 6      ein Schaubild, welches die in FIG 5 gezeigten Normalverteilungen nach einer Skalierung unter Anwendung des erfindungsgemäßen Verfahrens zum Abschätzen der Messgenauigkeit unterschiedlicher Sensoren für dieselbe Messgröße veranschaulicht,

FIG 7      ein Schaubild, welches Normalverteilungen von vier Messwerten von zwei unterschiedlichen Arten von Sensoren veranschaulicht,

FIG 8      ein Schaubild, welches die in FIG 7 gezeigten Normalverteilungen nach einer Skalierung unter Anwendung des erfindungsgemäßen Verfahrens zum Abschätzen der Messgenauigkeit unterschiedlicher Sensoren für dieselbe Messgröße veranschaulicht,

FIG 9      ein Schaubild, dass drei Normalverteilungen $n_1$, $n_2$, $n_3$ von Messwerten zeigt, die nicht miteinander im Konsens sind,

FIG 10      ein Schaubild, dass die in FIG 9 gezeigten Normalverteilungen $n_1$, $n_2$, $n_3$ im skalierten Zustand zeigt, nach Anwendung der erfindungsgemäßen Vorgehensweise,

FIG 11      ein Schaubild, dass die in FIG 9 gezeigten Normalverteilungen $n_1$, $n_2$, $n_3$ nach Anwendung einer alternativen Vorgehensweise veranschaulicht.

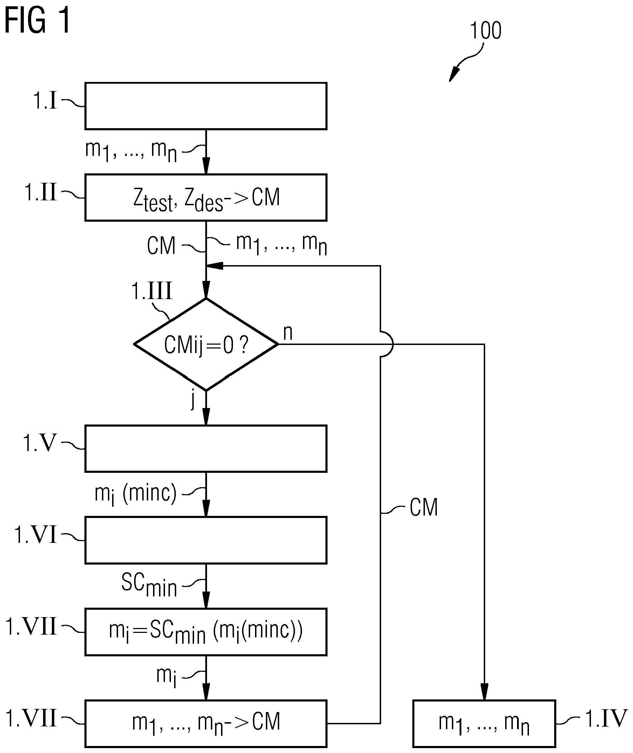

In FIG 1 ist ein Flussdiagramm 100 gezeigt, welches ein Verfahren zum Abschätzen der Messgenauigkeit unterschiedlicher Sensoren für dieselbe Messgröße gemäß einem Ausführungsbeispiel der Erfindung veranschaulicht. Bei dem Schritt 1.I werden zunächst Messwerte $m_1$, ..., $m_n$ derselben Messgröße, welche durch unterschiedliche Sensoren erfasst wurden, empfangen. Die Messwerte $m_1$, ..., $m_n$ umfassen Mittelwerte $\mu_1$, ..., $\mu_n$, denen jeweils Wahrscheinlichkeitsverteilungen $n_1$, ..., $n_n$ und jeweils Standardabweichungen $\sigma_1$, ..., $\sigma_n$ zugeordnet sind.

Bei dem Schritt 1.II wird ein z-Test durchgeführt, um zu ermitteln, ob die einem Sensor zugeordnete Wahrscheinlichkeitsverteilung der Messwerte skaliert werden muss. Bei diesem Test werden einzelne Messungen bzw. deren zugeordnete Wahrscheinlichkeitsverteilungen mit allen anderen Messungen verglichen. Falls ein solcher Test zwischen zwei Messungen positiv ausfällt, so wird dies als Nachweis gedeutet, dass die beiden Messungen ausreichend miteinander übereinstimmen, d.h. im Konsens miteinander sind. Für den z-Test wird vorab ein gewünschter Signifikanzwert p festgelegt. Aus diesem Signifikanzwert ergibt sich nach der Formel (1) ein Testschwellenwert $z_{des}$, der für ein positives Ergebnis des z-Tests erreicht werden muss. Der eigentliche Testwert $z_{test}$ ergibt sich aus Formel (2).

Falls also $z_{test} < z_{des}$, dann ist der Test negativ ausgefallen und die beiden Sensormessungen sind für den vorbestimmten Signifikanzwert p nicht im Konsens bzw. die beiden Messungen stimmen nicht ausreichend überein. In diesem Fall wird einem solchen Test in einer Konsens-Matrix CM der Wert 0 zugeordnet d.h. $CM_{ij} = 0$ (für $0 < i, j <= n$). Fällt der z-Test dagegen positiv aus, so wird dem Test in der Konsens-Matrix CM der Wert 1 zugeordnet. Die Konsens-Matrix weist insgesamt n*n Einträge auf. Es wird also bei dem Schritt 1.II eine Konsens-Matrix CM durch Anwenden eines z-Tests mit einem vorbestimmten Signifikanzwert p auf Basis der erfassten Messwerte $m_1, ..., m_n$ bzw. der diesen zugeordneten Mittelwerte $\mu_1, ..., \mu_n$ sowie einer angenommenen statistischen Normalverteilung der Messwerte vorgenommen.

Bei dem Schritt 1.III wird dann geprüft, ob ein Eintrag der Konsens-Matrix den Wert 0 aufweist. Haben alle Einträge der Konsens-Matrix den Wert 1, was in FIG 1 mit "n" gekennzeichnet ist, so wird zu dem Schritt 1.IV übergegangen und die ermittelten Messwerte $m_1, ..., m_n$ werden auf Basis der unskalierten, ursprünglichen Verteilungen $n_1, ..., n_n$ kombiniert. Weist dagegen ein Eintrag der Konsens-Matrix CM den Wert "0" auf, was in FIG 1 mit "n" gekennzeichnet ist, so wird zu dem Schritt 1.V übergegangen.

Weist also mindestens ein Eintrag der Konsens-Matrix CM den Wert 0 auf, so werden bei dem Schritt 1.V diejenigen Messwerte $m_i$(minc), die den geringsten Konsens aufweisen, d.h., denen die meisten Matrix-Einträge mit dem Wert 0 zugeordnet sind, als zu skalierende Messwerte festgelegt.

Anschließend wird bei dem Schritt 1.VI der kleinste Skalierungswert $sc_{min}$ ermittelt, mit dem eine einem dieser Messwerte $m_i$(minc) zugeordnete Normalverteilung $n_i$(minc) skaliert werden muss, um mindestens einen Eintrag der Konsens-Matrix CM von 0 auf 1 zu erhöhen.

Weiterhin werden bei dem Schritt 1.VII die Normalverteilungen $n_i$ aller Messwerte $m_i$ (minc), die bisher den geringsten Konsens aufweisen, mit dem kleinsten Skalierungswert $sc_{min}$ skaliert. Es erfolgt also ein Reskalieren der statistischen Normalverteilungen $n_i$ der Messwerte $m_i$, welche den geringsten Konsens aufweisen, mit dem kleinsten Skalierungswert $sc_{min}$, mit dem mindestens einer dieser Messwerte $m_i$ einen erhöhten Konsens aufweist.

Auf Basis der reskalierten Messwerte bzw. deren zugeordneten Normalverteilungen wird bei dem Schritt 1.VIII ein neuer Satz von Messwerten $m_1, ..., m_n$, gebildet, wobei den Messwerten $m_i$ skalierte Normalverteilungen $n_i$ und entsprechend geänderte Standardabweichungen $\sigma_i$ zugeordnet sind. Auf Basis des neuen Satzes von Messwerten $m_1, ..., m_n$ wird weiterhin bei dem Schritt 1.VIII eine neue Konsens-Matrix CM erzeugt, welche nun mindestens einen Eintrag mehr mit dem Wert 1 aufweist als die vorher berechnete Konsens-Matrix. Anschließend wird zu dem Schritt 1.III zurückgekehrt und dort wird geprüft, ob noch ein Eintrag $CM_{ij}$ der aktuellen Konsens-Matrix CM den Wert 0 aufweist. Ist das der Fall, was in FIG 1 mit "j" gekennzeichnet ist. so wird zu dem Schritt 1.V übergegangen, andernfalls wird zu dem Schritt 1.IV übergegangen, bei dem das Verfahren beendet wird. Am Ende des Verfahrens befinden sich alle Messwerte $m_1, ..., m_n$ in ausreichender statistischer Übereinstimmung miteinander.

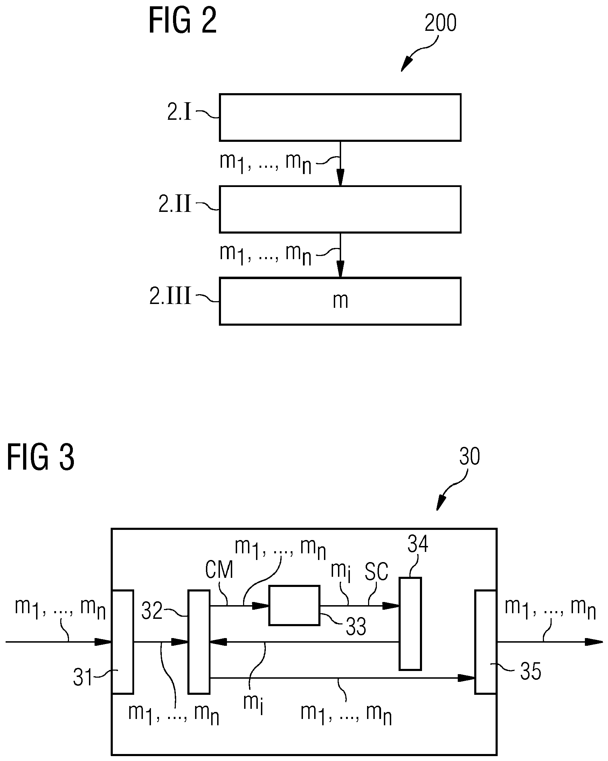

In FIG 2 ist ein Flussdiagramm 200 gezeigt, welches ein Messverfahren zum Ermitteln eines kombinierten Messwertes m einer Messgröße auf Basis von Messwerten $m_1, ..., m_n$ von einer Mehrzahl von unterschiedlichen Sensoren gemäß einem Ausführungsbeispiel der Erfindung veranschaulicht. Bei dem Schritt 2.I werden zunächst Messwerte $m_1, ..., m_n$ derselben Messgröße durch unterschiedliche Sensoren erfasst. Anschließend wird das erfindungsgemäße Verfahren zum Abschätzen der Messgenauigkeit unterschiedlicher Sensoren für dieselbe Messgröße auf die erfassten Messwerte angewendet. Schließlich wird bei dem Schritt 2.III ein kombinierter Messwert m der Messgröße durch gewichtetes Kombinieren der erfassten Messwerte $m_1, ..., m_n$ ermittelt. Dabei erfolgt die Gewichtung der einzelnen erfassten Messwerte $m_1, ..., m_n$ bzw. der diesen zugeordneten Mittelwerte in Abhängigkeit von den den jeweiligen Messwerten $m_1, ..., m_n$ zugeordneten Normalverteilungen n1, ..., $n_n$.

In FIG 3 ist eine Abschätzeinrichtung 30 gemäß einem Ausführungsbeispiel der Erfindung schematisch dargestellt. Die Abschätzeinrichtung 30 umfasst eine Eingangsschnittstelle 31. Die Eingangsschnittstelle 31 empfängt eine Mehrzahl von Messwerten $m_1, ..., m_n$ derselben Messgröße, welche von unterschiedlichen Sensoreinheiten erfasst wurden. Die Messwerte $m_1, ..., m_n$ werden an eine Konsens-Ermittlungseinheit 32, die ebenfalls Teil der Abschätzeinrichtung 32 ist, übermittelt. Die Konsens-Ermittlungseinheit 32 ermittelt auf Basis der erfassten Messwerte bzw. der diesen zugeordneten Daten, wie zum Beispiel der Mittelwerte $\mu_1, ..., \mu_n$ und der Standardabweichungen $\sigma_1, ..., \sigma_n$, eine Konsens-Matrix CM. Die Werte $CM_{ij}$ der Konsens-Matrix CM werden durch Anwenden eines z-Tests mit einem vorbestimmten Signifikanzwert p auf die den erfassten Messwerten $m_1, ..., m_n$ zugeordneten statistischen Größen $\mu_1, ...,$

$\mu_n$, $\sigma_1$, ..., $\sigma_n$ ermittelt.

Die Konsens-Matrix CM sowie die erfassten Messwerte $m_1$, ..., $m_n$ werden an eine Skalenwertermittlungseinheit 33 übermittelt. Die Skalenwertermittlungseinheit 33 ermittelt Skalierungswerte $sc_i$ der statistischen Normalverteilungen derjenigen Messwerte $m_i$, welche den geringsten Konsens aufweisen. Die Skalierungswerte $sc_i$ werden derart gewählt, dass die Messwerte $m_i$ mit der gewählten bzw. berechneten Skalierung jeweils einen erhöhten Konsens aufweisen. Die Messwerte $m_i$ sowie die Skalierungswerte $sc_i$ werden dann an eine Reskalierungseinheit 34 übermittelt. Die Reskalierungseinheit 34 reskaliert die statistischen Normalverteilungen der Messwerte $m_i$, welche den geringsten Konsens aufweisen, mit dem kleinsten ermittelten Skalierungswert $sc_{min}$, mit dem mindestens einer dieser Messwerte einen erhöhten Konsens aufweist. Die reskalierten Messwerte $m_i$ werden dann an die Konsens-Ermittlungseinheit 32 übermittelt, welche die Konsens-Matrix CM neu berechnet. Für den Fall, dass nun alle Einträge der Konsens-Matrix CM den Wert 1 aufweisen, werden die aktuellen zumindest teilweise reskalierten Messwerte $m_1$, ..., $m_n$ an eine Ausgangsschnittstelle 35 übermittelt und von dort aus ausgegeben. Falls, die neu berechnete Konsens-Matrix CM noch Einträge aufweist, die den Wert 0 aufweisen, so erfolgt eine erneute Bearbeitung der Messwerte $m_1$, ..., $m_n$ bzw. der diesen zugeordneten Normalverteilungen $n_1$, ..., $n_n$ durch die beschriebenen Einheiten 33, 34.

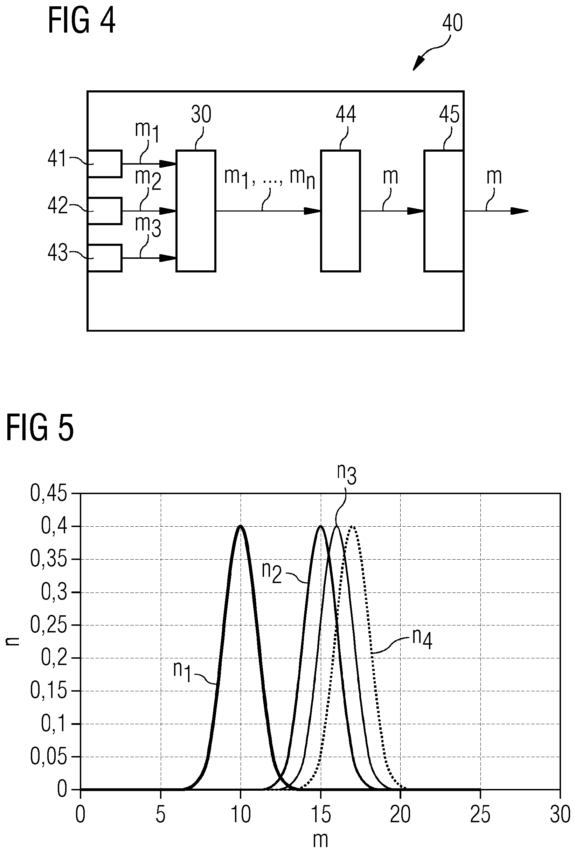

In FIG 4 ist eine Messeinrichtung 40 gemäß einem Ausführungsbeispiel der Erfindung schematisch dargestellt. Die Messeinrichtung 40 weist eine Mehrzahl von Sensoreinheiten 41, 42, 43 unterschiedlicher Art zum sensoriellen Erfassen von Messwerten $m_1$, ..., $m_n$ derselben Messgröße auf. Die Messeinrichtung 40 weist auch eine erfindungsgemäße Abschätzeinrichtung 30 auf, wie sie in FIG 3 veranschaulicht ist. Die Abschätzeinrichtung empfängt die erfassten Messwerte $m_1$, ..., $m_n$ und bearbeitet diese in der im Zusammenhang mit FIG 1 und FIG 3 beschriebenen Weise. Insbesondere werden den Messwerten zugeordnete Normalverteilungen für den Fall eines mangelnden Konsenses reskaliert. Die überarbeiteten Messwerte $m_1$, ..., $m_n$ werden dann an eine Fusionseinheit 44 übermittelt. Die Fusionseinheit 44 ermittelt einen gemeinsamen Messwert m der Messgröße durch gewichtetes Kombinieren der erfassten und gegebenenfalls reskalierten Messwerte $m_1$, ..., $m_n$, wobei die Gewichtung in Abhängigkeit von der den jeweiligen Messwerten $m_1$, ..., $m_n$ zugeordneten Normalverteilung erfolgt. Das Messergebnis m wird dann über eine Ausgangsschnittstelle 45 an andere Einheiten, wie zum Beispiel eine Steuerungseinheit oder eine Anzeigeeinheit, ausgegeben.

In FIG 5 ist ein Schaubild gezeigt, welches Normalverteilungen $n_1$, $n_2$, $n_3$, $n_4$ von Messwerten $m_1$, $m_2$, $m_3$, $m_4$ zeigt, die von unterschiedlichen Sensoren erfasst wurden, veranschaulicht. Es sind Wahrscheinlichkeitsdichtewerte n über Messwerte m aufgetragen. Als Signifikanzwert wird ein Wert p = 0,2 zugrunde gelegt. Während die zweite bis vierte Normalverteilung $n_2$, $n_3$, $n_4$ miteinander ausreichend übereinstimmen, liegt die erste Normalverteilung $n_1$ weiter entfernt von den anderen Verteilungen und damit nicht im Konsens mit diesen. Die erste Normalverteilung $n_1$ liegt also am wenigsten, nämlich mit keiner der anderen Verteilung im Konsens, während die anderen Verteilungen $n_2$, $n_3$, $n_4$ jeweils mit zwei anderen Verteilungen im Konsens sind.

Unter Anwendung des im Zusammenhang mit FIG 1 beschriebenen Verfahrens muss also zunächst nur die erste Normalverteilung $n_1$ skaliert werden, bis sie im Konsens mit der zweiten und der dritten Normalverteilung $n_2$, $n_3$ ist. In diesem Zustand befinden sich die zweite und die dritte Normalverteilung $n_2$, $n_3$ mit allen anderen Normalverteilungen im Konsens und die erste und die vierte Normalverteilung $n_1$, $n_4$ sind jeweils mit zwei Normalverteilungen im Konsens. Mithin erfolgt nun eine Skalierung der ersten und der vierten Normalverteilung $n_1$, $n_4$, bis diese beiden Verteilungen miteinander im Konsens sind.

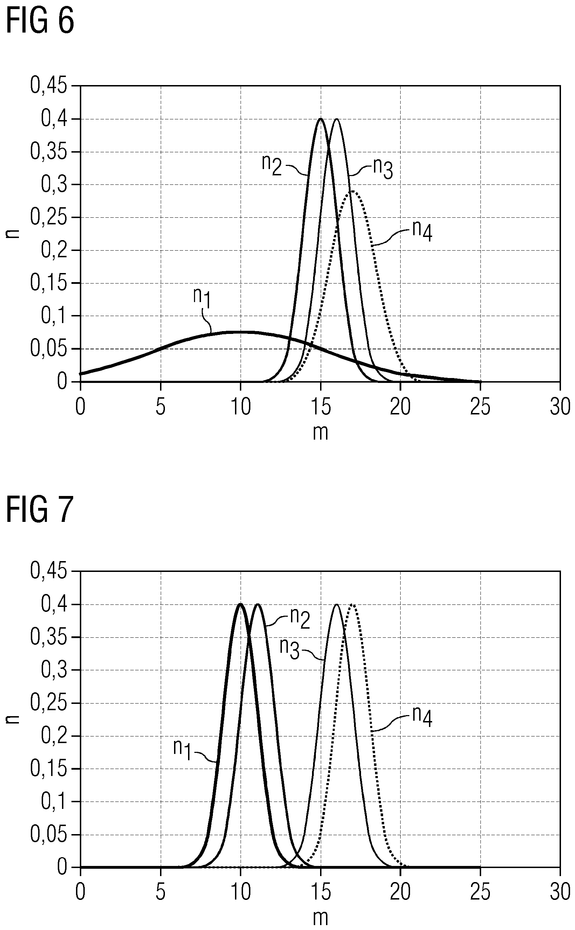

Nun ist das in FIG 6 veranschaulichte Stadium erreicht, bei dem alle vier Normalverteilungen $n_1$, $n_2$, $n_3$, $n_4$ miteinander im Konsens sind. Bei einer Fusion der zugehörigen Messwerte würde der zweite und der dritte Messwert $m_2$, $m_3$ bzw. die diesen zugeordneten Mittelwerte am stärksten gewichtet und der erste Messwert $m_1$ bzw. der diesem zugeordnete Mittelwert am wenigsten gewichtet.

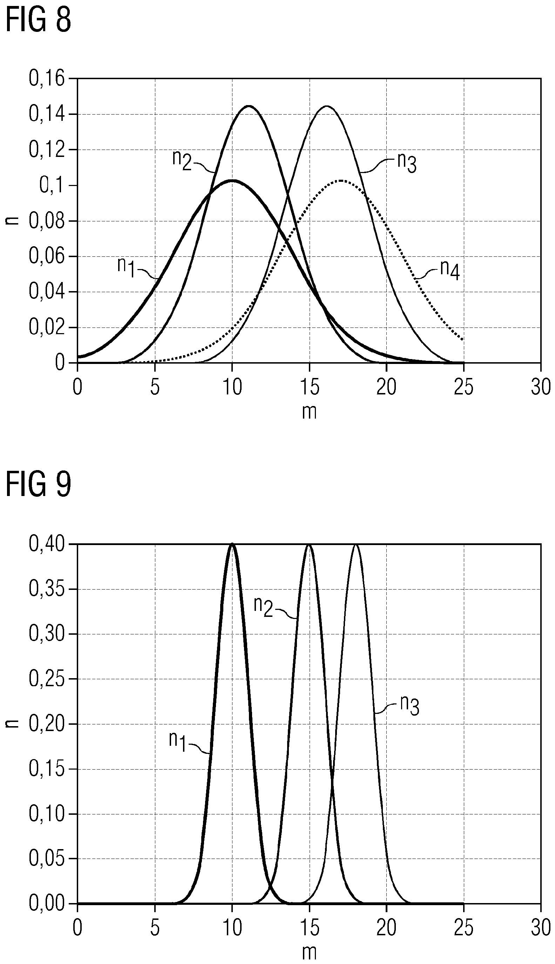

In FIG 7 und FIG 8 ist ein Beispiel veranschaulicht, in dem für vier unterschiedliche Messwerte zwei Gruppen von einander relativ ähnlichen Sensoren zur Messung der Messwerte genutzt wurden. Die jeweiligen Normalverteilungen der Messwerte derselben Gruppe sind daher miteinander im Konsens. Dagegen weichen Messwerte unterschiedlicher Gruppen stark voneinander ab und befinden sich nicht im Konsens. Würde man nun in herkömmlicher Weise die Mahalanobis-Distanz berechnen, so würde man vermutlich ein Paar von Messungen verwerfen, was eigentlich nicht gerechtfertigt ist, da beide Gruppen von Messungen gleichrangig sind.

In FIG 7 ist zu erkennen, dass die Normalverteilungen $n_1$, $n_2$ der Messungen $m_1$, $m_2$ der ersten Gruppe miteinander im Konsens sind und die Normalverteilungen $n_3$, $n_4$ der Messungen $m_3$, $m_4$ der zweiten Gruppe miteinander im Konsens sind. Dagegen sind Messungen unterschiedlicher Gruppen nicht miteinander im Konsens. Zunächst werden daher alle Normalverteilungen skaliert, bis die zweite und die dritte Normalverteilung $n_2$, $n_3$ miteinander im Konsens sind. Anschließend werden nur noch die erste und die vierte Normalverteilung $n_1$, $n_4$ weiterskaliert, bis auch diese beiden Verteilungen im Konsens sind. Das Ergebnis der Skalierungen ist in FIG 8 zu erkennen. Aufgrund der Symmetrie der Verteilungen in FIG 8 liegt nun ein kombinierter Mittelwert genau in der Mitte zwischen den aktuellen sowie auch den ursprünglichen Verteilungen. Eine Verschiebung aus der Mitte, wie bei einer Verwendung der Mahalanobis-Distanz, erfolgt hier nicht.

In FIG 9 bis 11 wird veranschaulicht, warum die Vorgehensweise, die zu skalierenden Messwerte $m_i$ mit demselben Wert $sc_{min}$ zu skalieren, welcher derart gewählt ist, dass mindestens eine der Messungen $m_i$ einen erhöhten Konsens erhält, so effektiv ist.

In FIG 9 ist eine Situation zu erkennen, in der alle drei Normalverteilungen $n_1$, $n_2$, $n_3$ nicht miteinander im Konsens sind. Zunächst werden alle drei Normalverteilungen skaliert, bis die zweite $n_2$ mit der dritten Normalverteilung $n_3$ im Konsens ist. Danach wird zunächst nur noch die erste Normalverteilung $n_1$ skaliert, bis sie im Konsens mit der zweiten Normalverteilung $n_2$ ist. Nun werden die erste und die dritte Normalverteilung $n_1$, $n_3$ skaliert, bis diese miteinander im Konsens sind.

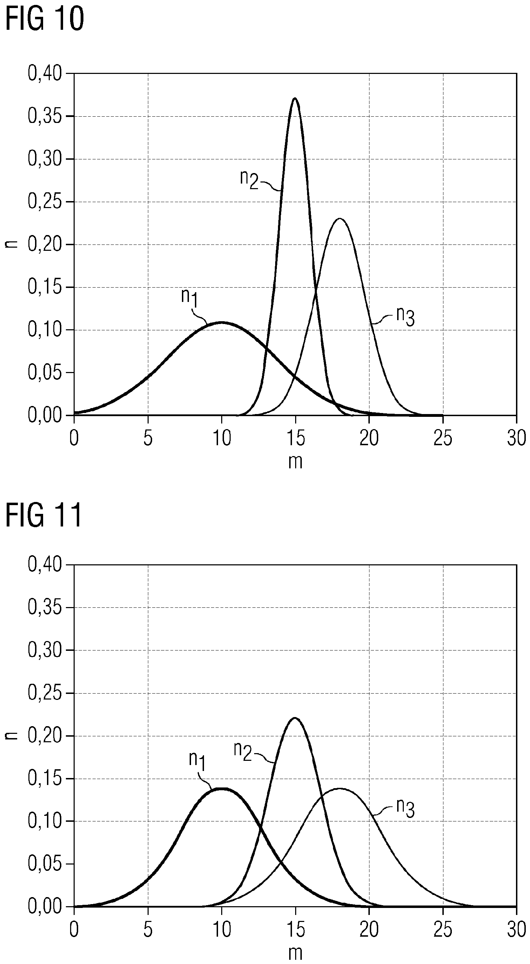

Das Ergebnis der Skalierungen ist in FIG 10 zu erkennen. Während die zweite Normalverteilung $n_2$ nur wenig skaliert wurde, wurde die dritte Normalverteilung $n_3$ etwas mehr und am meisten die erste Normalverteilung $n_1$ skaliert. Mithin wird der zweite Messwert $m_2$ bei der Fusion der Messwerte $m_1$, $m_2$, $m_3$ am stärksten gewichtet, der dritte Messwert $m_3$ am zweistärksten und der erste Messwert $m_1$ am schwächsten gewichtet, wie es auch anhand der FIG 9 zu erwarten wäre.

FIG 11 zeigt die skalierten Verteilungen $n_1$, $n_2$, $n_3$ für den Fall, dass alle zu skalierenden Verteilungen in einem Schritt derart skaliert würden, dass sie alle im Konsens sind. Wie in FIG 11 zu erkennen, sind die erste und die dritte Verteilung $n_1$, $n_3$ gleich stark skaliert und die zweite Verteilung $n_2$ ist stärker skaliert als bei der erfindungsgemäßen Vorgehensweise. In diesem Fall würden also der erste Messwert $m_1$ und der dritte Messwert $m_3$ gleich stark gewichtet werden und der zweite Messwert $m_2$ schwächer als bei dem in FIG 10 gezeigten Verfahren. Mithin würde das Ergebnis in FIG 11 nicht den Umstand wiederspiegeln, dass sich der zweite Messwert $m_2$ näher beim dritten Messwert $m_3$ als beim ersten Messwert $m_1$ befindet. Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zum Abschätzen der Messgenauigkeit unterschiedlicher Sensoren für dieselbe Messgröße, aufweisend die Schritte:

   - Empfangen von Messwerten ($m_1$, ..., $m_n$) derselben Messgröße, welche durch unterschiedliche Sensoren (41, 42, 43) erfasst wurden,
   - Ermitteln einer Konsens-Matrix (CM) durch Anwenden eines z-Tests mit einem vorbestimmten Signifikanzwert (P) auf Basis der erfassten Messwerte ($m_1$, ..., $m_n$) sowie einer angenommenen statistischen Normalverteilung ($n_1$, ..., $n_n$) der Messwerte,
   - Reskalieren der statistischen Normalverteilungen ($n_i$) der Messwerte ($m_i(minc)$), welche den geringsten Konsens aufweisen, mit dem kleinsten Skalierungswert ($sc_{min}$), mit dem mindestens einer dieser Messwerte ($m_i(minc)$) einen erhöhten Konsens aufweist,
   - Wiederholen der beiden letzten Schritte, bis ein gewünschtes Konsens-Niveau erreicht ist.

2. Verfahren nach Anspruch 1, wobei die beiden letzten Schritte wiederholt werden, bis die Konsens-Matrix (CM) vollständigen Konsens aufweist.

3. Verfahren nach Anspruch 1 oder 2, wobei eine Mehrzahl von Kandidatenskalenwerten (sc), mit denen jeweils ein Messwert ($m_i(_{minc})$) einen erhöhten Konsens aufweist, berechnet werden, von denen der kleinste Skalierungswert ($sc_{min}$) für die Reskalierung ausgewählt wird.

4. Verfahren nach einem Anspruch 3, wobei die Kandidatenskalierungswerte (sc) für den Fall, dass die für die Berechnung der Kandidatenskalierungswerte (sc) verwendeten Vergleichswerte ($m_j$) nicht zu den Messwerten ($m_i(_{minc})$) gehören, die den niedrigsten Konsens aufweisen, nach folgender Formel berechnet werden:

$$sc = \sqrt{\frac{\left(\frac{\mu_i - \mu_j}{z_{des}}\right)^2 - \sigma_j^2}{\sigma_i^2}} \, ,$$

wobei $\mu_i$ Mittelwerte der zu prüfenden Messwerte, $\mu_j$ Mittelwerte der Vergleichswerte $m_j$, welche ebenfalls aus den Messwerten entnommen werden, $z_{des}$ den gewünschten $z_{Wert}$, $\sigma_i$ die Standardabweichung der Verteilung $n_i$ des zu prüfenden Messwerts $m_i$ und $\sigma_j$ die Standardabweichung der Verteilung $n_j$ des Vergleichswerts $m_j$ darstellen.

5. Verfahren nach einem der vorstehenden Ansprüche, wobei die Kandidatenskalierungswerte (sc) für den Fall, dass die für die Berechnung der Kandidatenskalierungswerte (sc) verwendeten Vergleichswerte $m_j$ ebenfalls zu den Messwerten gehören, die den niedrigsten Konsens aufweisen, nach folgender Formel berechnet werden:

$$sc = \sqrt{\frac{\left(\frac{\mu_i - \mu_j}{z_{des}}\right)^2}{\sigma_i^2 + \sigma_j^2}} \, ,$$

wobei $\mu_i$ Mittelwerte der zu prüfenden Messwerte, $\mu_j$ Mittelwerte der Vergleichswerte $m_j$, welche ebenfalls aus den Messwerten entnommen werden, $z_{des}$ den gewünschten $z_{Wert}$, $\sigma_i$ die Standardabweichung der Verteilung des zu prüfenden Messwerts $m_i$ und $\sigma_j$ die Standardabweichung der Verteilung des Vergleichswerts $m_j$ darstellen.

6. Messverfahren zum Ermitteln eines Messwertes (m) einer Messgröße auf Basis von Messwerten ($m_1$, ..., $m_n$) von einer Mehrzahl von unterschiedlichen Sensoren (41, 42, 43), aufweisend die Schritte:

   - sensorielles Erfassen von Messwerten ($m_1$, ..., $m_n$) derselben Messgröße durch unterschiedliche Sensoren (41, 42, 43),
   - Anwenden des Verfahrens nach einem der Ansprüche 1 bis 5 auf die erfassten Messwerte ($m_1$, ..., $m_n$),
   - Ermitteln eines kombinierten Messwertes (m) der Messgröße durch gewichtetes Kombinieren der erfassten Messwerte ($m_1$, ..., $m_n$), wobei die Gewichtung in Abhängigkeit von den den jeweiligen Messwerten ($m_1$, ..., $m_n$) zugeordneten Normalverteilungen ($n_1$, ..., $n_n$) erfolgt.

7. Messverfahren nach einem der vorstehenden Ansprüche, wobei die Messgröße die Geschwindigkeit eines Schienenfahrzeugs umfasst.

8. Abschätzeinrichtung (30), aufweisend:

   - eine Schnittstelle (31) zum Empfangen einer Mehrzahl von Messwerten ($m_1$, ..., $m_n$) derselben Messgröße, welche von unterschiedlichen Sensoreinheiten (41, 42, 43) erfasst wurden,
   - eine Konsens-Ermittlungseinheit (32) zum Ermitteln einer Konsens-Matrix (CM) durch Anwenden eines z-Tests mit einem vorbestimmten Signifikanzwert (p) auf Basis der erfassten Messwerte ($m_1$, ..., $m_n$) sowie einer angenommenen statistischen Normalverteilung ($n_1$, ..., $n_n$) der Messwerte und zum Prüfen, ob ein gewünschtes Konsens-Niveau (CM) erreicht ist,
   - eine Skalenwertermittlungseinheit (33) zum Ermitteln von Skalierungswerten (sc) der statistischen Normalverteilungen der Messwerte ($m_i$), welche den geringsten Konsens aufweisen, mit denen die Messwerte jeweils einen erhöhten Konsens aufweisen,
   - eine Reskalierungseinheit (34) zum Reskalieren der statistischen Normalverteilungen ($n_i$) der Messwerte ($m_i$), welche den geringsten Konsens aufweisen, mit dem kleinsten ermittelten Skalierungswert ($sc_{min}$), mit dem mindestens einer dieser Messwerte ($m_i$) einen erhöhten Konsens aufweist.

9. Messeinrichtung (40), aufweisend:

   - eine Mehrzahl von Sensoreinheiten (41, 42, 43) unterschiedlicher Art zum sensoriellen Erfassen von Mess-

werten ($m_1$, ..., $m_n$) derselben Messgröße,
- eine Abschätzeinrichtung (30) nach Anspruch 8 zum Ermitteln von Normalverteilungen für die erfassten Messwerte ($m_1$, ..., $m_n$) entsprechend einem vorbestimmten Konsens-Niveau,
- eine Fusionseinheit (44) zum Ermitteln eines gemeinsamen Messwertes (m) der Messgröße durch gewichtetes Kombinieren der erfassten Messwerte ($m_1$, ..., $m_n$), wobei die Gewichtung in Abhängigkeit von den den jeweiligen Messwerten ($m_1$, ..., $m_n$) zugeordneten Normalverteilungen ($n_1$, ..., $n_n$) erfolgt.

**10.** Schienenfahrzeug, aufweisend eine Abschätzeinrichtung (30) nach Anspruch 8.

**11.** Computerprogrammprodukt mit einem Computerprogramm, welches direkt in eine Speichereinheit einer Abschätzeinrichtung (30) ladbar ist, mit Programmabschnitten, um alle Schritte eines Verfahrens nach einem der Ansprüche 1 bis 5 auszuführen, wenn das Computerprogramm in der Abschätzeinrichtung gemäß Anspruch 8 ausgeführt wird.

**12.** Computerlesbares Medium, auf welchem ein Computerprogrammprodukt gemäß Anspruch 11 abgespeichert ist.

## Claims

**1.** Method for assessing the measurement accuracy of different sensors for the same measurement variable, having the steps:

- receiving measurement values ($m_1$, ..., $m_n$) of the same measurement variable, which have been recorded by different sensors (41, 42, 43),
- ascertaining a consensus matrix (CM) by applying a z-test with a predetermined significance value (P) on the basis of the recorded measurement values ($m_1$, ..., $m_n$) as well as an assumed statistical normal distribution ($n_1$, ..., $n_n$) of the measurement values,
- rescaling the statistical normal distributions ($n_i$) of the measurement values ($m_i$ (mine)), which have the lowest consensus, with the smallest scaling value ($sc_{min}$), with which at least one of these measurement values ($m_i$(minc)) has an increased consensus,
- repeating the last two steps until a desired consensus level is reached.

**2.** Method according to claim 1, wherein the last two steps are repeated until the consensus matrix (CM) has full consensus.

**3.** Method according to claim 1 or 2, wherein a plurality of candidate scale values (sc), with which a measurement value ($m_i(_{minc})$) has an increased consensus in each case, are calculated, of which the smallest scaling value ($sc_{min}$) is selected for the rescaling.

**4.** Method according to claim 3, wherein, in the event that the comparison values ($m_j$) used for the calculation of the candidate scaling values (sc) do not belong to the measurement values ($m_i(_{minc})$) which have the lowest consensus, the candidate scaling values (sc) are calculated according to the following formula:

$$sc = \sqrt{\frac{\left(\frac{\mu_i - \mu_j}{z_{des}}\right)^2 - \sigma_j^2}{\sigma_i^2}},$$

wherein $\mu_i$ represents average values of the measurement values to be checked, $\mu_j$ represents average values of the comparison values $m_j$, which are also taken from the measurement values, $z_{des}$ represents the desired $z_{value}$, $\sigma_i$ represents the standard deviation of the distribution $n_i$ of the measurement value $m_i$ to be checked and $\sigma_j$ represents the standard deviation of the distribution $n_j$ of the comparison value $m_j$.

**5.** Method according to one of the preceding claims, wherein, in the event that the comparison values $m_j$ used for the calculation of the candidate scaling values (sc) also belong to the measurement values which have the lowest consensus, the candidate scaling values (sc) are calculated according to the following formula:

$$sc = \sqrt{\frac{\left(\frac{\mu_i - \mu_j}{z_{des}}\right)^2}{\sigma_i^2 + \sigma_j^2}},$$

wherein $\mu_i$ represents average values of the measurement values to be checked, $\mu_j$ represents average values of the comparison values $m_j$, which are also taken from the measurement values, $z_{des}$ represents the desired $z_{value}$, $\sigma_i$ represents the standard deviation of the distribution of the measurement value $m_i$ to be checked and $\sigma_j$ represents the standard deviation of the distribution of the comparison value $m_j$.

6.  Measurement method for ascertaining a measurement value (m) of a measurement variable on the basis of measurement values ($m_1$, ..., $m_n$) of a plurality of different sensors (41, 42, 43), having the steps:

    - sensory recording of measurement values ($m_1$, ..., $m_n$) of the same measurement variable by different sensors (41, 42, 43),
    - applying the method according to one of claims 1 to 5 to the measurement values ($m_1$, ..., $m_n$) recorded,
    - ascertaining a combined measurement value (m) of the measurement variable by weighted combining of the recorded measurement values ($m_1$, ..., $m_n$), wherein the weighting takes place as a function of the normal distributions ($n_1$, ..., $n_n$) assigned to the respective measurement values ($m_1$, ..., $m_n$).

7.  Measurement method according to one of the preceding claims, wherein the measurement variable comprises the speed of a rail vehicle.

8.  Assessment facility (30), having:

    - an interface (31) for receiving a plurality of measurement values ($m_1$, ..., $m_n$) of the same measurement variable, which have been recorded by different sensor units (41, 42, 43),
    - a consensus ascertaining unit (32) for ascertaining a consensus matrix (CM) by applying a z-test with a predetermined significance value (p) on the basis of the recorded measurement values ($m_1$, ..., $m_n$) as well as an assumed statistical normal distribution ($n_1$, ..., $n_n$) of the measurement values and for checking whether a desired consensus level (CM) is reached,
    - a scale value ascertaining unit (33) for ascertaining scaling values (sc) of the statistical normal distributions of the measurement values ($m_i$), which have the lowest consensus, with which the measurement values have an increased consensus in each case,
    - a rescaling unit (34) for rescaling the statistical normal distributions ($n_i$) of the measurement values ($m_i$), which have the lowest consensus, with the smallest ascertained scaling value ($sc_{min}$), with which at least one of these measurement values ($m_i$) has an increased consensus.

9.  Measurement facility (40), having:

    - a plurality of sensor units (41, 42, 43) of a different kind for sensory recording of measurement values ($m_1$, ..., $m_n$) of the same measurement variable,
    - an assessment facility (30) according to claim 8 for ascertaining normal distributions for the recorded measurement values ($m_1$, ..., $m_n$) according to a predetermined consensus level,
    - a fusion unit (44) for ascertaining a common measurement value (m) of the measurement variable by weighted combining of the recorded measurement values ($m_1$, ..., $m_n$), wherein the weighting takes place as a function of the normal distributions ($n_1$, ..., $n_n$) assigned to the respective measurement values ($m_1$, ..., $m_n$).

10. Rail vehicle, having an assessment facility (30) according to claim 8.

11. Computer program product with a computer program, which can be loaded directly into a memory unit of an assessment facility (30), with program sections, in order to carry out all steps of a method according to one of claims 1 to 5, when the computer program is executed in the assessment facility according to claim 8.

12. Computer-readable medium, on which a computer program product according to claim 11 is stored.

**Revendications**

1. Procédé d'estimation de la précision de mesure de capteurs différents de la même grandeur de mesure, comportant les stades :

   - la réception de valeurs ($m_1$, ..., $m_n$) de mesure de la même grandeur de mesure, qui ont été relevées dans des capteurs (41, 42, 43) différents,
   - la détermination d'une matrice (CM) de consensus par application d'un test z ayant une valeur (p) significative déterminée à l'avance sur la base des valeurs ($m_1$, ..., $m_n$) de mesure relevées ainsi que d'une distribution ($n_1$, ..., $n_n$) statistique normale supposée des valeurs de mesure,
   - la remise à l'échelle des distributions ($n_i$) statistiques normales des valeurs ($m_i$(minc)) de mesure, qui ont le consensus le plus petit, par la valeur ($sc_{min}$) de mise à l'échelle la plus petite, avec laquelle au moins l'une de ces valeurs ($m_i$(minc)) de mesure a un consensus élevé,
   - la répétition des deux derniers stades jusqu'à ce qu'un niveau de consensus souhaité soit atteint.

2. Procédé suivant la revendication 1, dans lequel on répète les deux derniers stades jusqu'à ce que la matrice (CM) de consensus ait un consensus complet.

3. Procédé suivant la revendication 1 ou 2, dans lequel on calcule une pluralité de valeurs (sc) de mise échelle candidates, avec lesquelles respectivement une valeur ($m_i$(minc)) de mesure a un consensus élevé, dont on sélectionne pour la remise à l'échelle la valeur ($sc_{min}$) de mise à l'échelle la plus petite.

4. Procédé suivant une revendication 3, dans lequel on calcule par la formule suivante les valeurs (sc) de mise à l'échelle candidates dans le cas où les valeurs ($m_j$) de comparaison, utilisées pour le calcul des valeurs (sc) de mise à l'échelle candidates, n'appartiennent pas aux valeurs ($m_i$(minc)) de mesure, qui ont le consensus le plus petit :
   dans laquelle $\mu_i$ représente des moyennes des valeurs de mesure à contrôler, $\mu_j$ des moyennes des valeurs $m_j$ de comparaison qui sont prises également dans les valeurs de mesure, $Z_{des}$ la valeur $Z_{Wert}$ souhaitée, $\sigma_i$ l'écart-type de la distribution $n_i$ de la valeur $m_i$ de mesure à contrôler et $\sigma_j$ l'écart-type de la distribution $n_j$ de la valeur $m_j$ de comparaison.

5. Procédé suivant l'une des revendications précédentes, dans

$$sc = \sqrt{\frac{\left(\frac{\mu_i - \mu_j}{z_{des}}\right)^2 - \sigma_j^2}{\sigma_i^2}},$$

laquelle on calcule par la formule suivante les valeurs (sc) de mise à l'échelle candidates dans le cas où les valeurs $m_j$ de comparaison, utilisées pour le calcul des valeurs (sc) de mise à l'échelle candidates, appartiennent également aux valeurs de mesure, qui ont le consensus le plus petit :

$$sc = \sqrt{\frac{\left(\frac{\mu_i - \mu_j}{z_{des}}\right)^2}{\sigma_i^2}},$$

dans lequel $\mu_i$ représente des moyennes des valeurs de mesure à contrôler, $\mu_j$ des moyennes des valeurs $m_j$ de comparaison, qui sont prises également dans les valeurs de mesure, $Z_{des}$ la valeur $Z_{wert}$ souhaitée, $\sigma_i$ l'écart-type de la distribution $m_i$ de la valeur $m_i$ de mesure à contrôler et $\sigma_j$ l'écart-type de la distribution de la valeur $m_j$ de comparaison.

6. Procédé de mesure pour la détermination d'une valeur (m) de mesure d'une grandeur de mesure sur la base de

valeurs ($m_1$, ..., $m_n$) de mesure d'une pluralité de capteurs (41, 42, 43) différents comportant les stades :

- le relevé par capteur de valeurs ($m_1$, ..., $m_n$) de mesure de la même grandeur de mesure par des capteurs (41, 42, 43) différents,
- l'application du procédé suivant l'une des revendications 1 à 5 aux valeurs ($m_1$, ..., $m_n$) de mesure relevées,
- la détermination d'une valeur ($m$) de mesure combinée de la grandeur de mesure par combinaison pondérée des valeurs ($m_1$, ..., $m_n$) de mesure relevées, la pondération s'effectuant en fonction des distributions ($n_1$, ..., $n_n$) normales associées aux valeurs ($m_1$, ..., $m_n$) de mesure respectives.

7. Procédé de mesure suivant l'une des revendications précédentes, dans lequel la grandeur de mesure comprend la vitesse d'un véhicule ferroviaire.

8. Dispositif (30) d'estimation, comportant :

- une interface (31) de réception d'une pluralité de valeurs ($m_1$, ..., $m_n$) de mesure de la même grandeur de mesure, qui ont été relevées par des unités (41, 42, 43) de capteur différentes,
- une unité (32) de détermination de consensus pour la détermination d'une matrice (CM) de consensus par application d'un test z ayant une valeur ($p$) significative déterminée à l'avance sur la base des valeurs ($m_1$, ..., $m_n$) de mesure relevées ainsi que d'une distribution ($n_1$, ..., $n_n$) statistique normale supposée des valeurs de mesure, et pour contrôler si un niveau (CM) de consensus souhaité est atteint,
- une unité (33) de détermination de valeurs de mise à l'échelle pour la détermination de valeurs ($sc$) de mise à l'échelle des distributions statistiques normales des valeurs ($m_i$) de mesure, qui ont le consensus le plus petit, avec lesquelles les valeurs de mesure ont respectivement un consensus élevé,
- une unité (34) de remise à l'échelle pour la remise à l'échelle des distributions ($n_i$) statistiques normales des valeurs ($m_i$) de mesure, qui ont la valeur ($sc_{min}$) de mise à l'échelle déterminée la plus petite, avec laquelle au moins l'une de ces valeurs ($m_i$) de mesure a un consensus élevé.

9. Dispositif (40) de mesure comportant :

- une pluralité d'unités (41, 42, 43) de capteur de type différent pour le relevé par détection de valeurs ($m_1$, ..., $m_n$) de mesure de la même grandeur de mesure,
- un dispositif (30) d'estimation suivant la revendication 8 pour la détermination de distributions normales des valeurs ($m_1$, ..., $m_n$) de mesure relevées correspondant à un niveau de consensus défini à l'avance,
- une unité (44) de fusion pour la détermination d'une valeur ($m$) de mesure commune de la grandeur de mesure par combinaison pondérée des valeurs ($m_1$, ..., $m_n$) de mesure relevées, la pondération s'effectuant en fonction des distributions ($n_1$, ..., $n_n$) de mesure normales associées aux valeurs ($m_1$, ..., $m_n$) de mesure respectives.

10. Véhicule ferroviaire ayant un dispositif (30) d'estimation suivant la revendication 8.

11. Produit de programme d'ordinateur ayant un programme d'ordinateur, qui peut être chargé directement dans une unité de mémoire d'un dispositif (30) d'estimation, comprenant des parties de programme pour effectuer tous les stades d'un procédé suivant l'une des revendications 1 à 5, lorsque le programme d'ordinateur est réalisé dans le dispositif d'estimation suivant la revendication 8.

12. Support déchiffrable par ordinateur, sur lequel est mis en mémoire un produit de programme d'ordinateur suivant la revendication 11.

FIG 1

100

1.I

$m_1, ..., m_n$

1.II $\quad Z_{test}, Z_{des}->CM$

CM $\quad m_1, ..., m_n$

1.III

$CM_{ij}=0$ ?

n

j

1.V

$m_i$ (minc)

1.VI

$SC_{min}$

1.VII $\quad m_i=SC_{min} (m_i(minc))$

$m_i$

CM

1.VII $\quad m_1, ..., m_n->CM$

$m_1, ..., m_n$ $\quad$ 1.IV

## FIG 2

200

2.I

$m_1, ..., m_n$

2.II

$m_1, ..., m_n$

2.III    $m$

## FIG 3

30

$m_1, ..., m_n$

CM    $m_1, ..., m_n$    $m_i$    SC    34

32    33

31    $m_1, ..., m_n$    $m_i$    $m_1, ..., m_n$    35

$m_1, ..., m_n$

FIG 4

FIG 5

## FIG 6

## FIG 7

## FIG 8

## FIG 9

## FIG 10

## FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010312461 A
- DE 102013210361 A
- US 2013132784 A